# DEMANDE DE BREVET EUROPEEN

(11) **EP 3 124 828 A1**
(43) Date de publication de la demande: **01.02.2017**
(21) Numéro de dépôt: 16178486.3
(22) Date de dépôt: 07.07.2016
(51) Int. Cl.: F16F 15/133

(54) **PROCÉDÉ DE MONTAGE D'UN GALET SUR UN VOLANT D'INERTIE D'UN DOUBLE VOLANT AMORTISSEUR À LAMES POUR VÉHICULE AUTOMOBILE**

(30) Priorité: 29.07.2015 FR 1557281
(71) Demandeur: NTN-SNR Roulements, 74000 Annecy (FR)
(72) Inventeur: BONNAUDET, Aurélien, 74000 Annecy (FR); EHINGER, Pierre, 74210 Faverges (FR)
(74) Mandataire: Sayettat, Julien Christian

(57) **Abrégé**

L'invention concerne un procédé de montage d'un galet (10) sur un volant d'inertie (3) d'un double volant amortisseur pour véhicule automobile, ledit galet étant destiné à être disposé en roulement sur une lame élastique (8) solidaire de l'autre volant d'inertie (1) en y exerçant un effort de flexion réversible de ladite lame en fonction des débattements angulaires relatifs desdits volants, ledit procédé prévoyant de : monter en rotation ledit galet autour d'une tige (11) comprenant une extrémité annulaire creuse (11a), ladite tige étant introduite dans un orifice (24) du volant (3) en disposant ladite extrémité en saillie dudit orifice ; d'interposer une rondelle (21) déformable élastiquement entre une portée d'envers (23) entourant l'orifice (24) et un épaulement (22) formé autour de la tige (11) ; de comprimer axialement ladite rondelle entre ladite portée d'envers et ledit épaulement ; de déformer ladite extrémité pour former une collerette (12) disposée en appui sur une portée d'endroit (25) entourant ledit orifice, la compression étant agencée pour, par retour élastique de la rondelle (21), contraindre axialement l'appui de la collerette (12) sur la portée (25).

## Description

L'invention concerne un procédé de montage d'un galet sur un volant d'inertie de double volant amortisseur pour véhicule automobile, ainsi qu'un double volant amortisseur pour véhicule automobile sur un volant inertie duquel un galet est monté mobile en rotation par mise en oeuvre d'un tel procédé.

De façon générale, les doubles volants amortisseurs comprennent un volant d'inertie primaire destiné à être monté sur une extrémité d'un vilebrequin, notamment d'un moteur à combustion, ainsi qu'un volant d'inertie secondaire destiné à coopérer avec un disque de friction d'un embrayage et monté en rotation relative par rapport au volant primaire au moyen d'un palier à roulement, tel que par exemple un roulement à billes.

Par ailleurs, les doubles volants amortisseurs comprennent des moyens d'amortissement agencés pour transmettre un couple et amortir les acyclismes de rotation entre les volants d'inertie.

En particulier, on connaît du document FR-3 008 152 un tel double volant amortisseur, dont les moyens d'amortissement comprennent au moins une lame élastique solidaire en rotation d'un des volants d'inertie et au moins un galet monté mobile en rotation sur l'autre volant d'inertie, notamment suivant un axe parallèle à l'axe de rotation relative des volants, ladite lame présentant une surface de came sur laquelle une paroi périphérique du galet est disposée en roulement.

Ainsi, lors d'un débattement angulaire relatif des volants d'inertie, la paroi périphérique du galet, en roulant sur la surface de came de la lame, exerce sur ladite lame un effort de flexion réversible, auquel ladite lame réagit en exerçant sur ledit galet une force de rappel qui tend à ramener lesdits volants d'inertie vers leur position angulaire de repos.

Une telle réalisation s'avère particulièrement avantageuse, en ce qu'elle permet de simplifier de façon importante la fabrication des doubles volants amortisseurs. En outre, elle propose une structure qui permet d'obtenir des débattements angulaires importants, ce qui permet l'utilisation de moyens d'amortissement avec une raideur restreinte, et donc une plus grande efficacité.

En particulier, le document FR-3 008 152 prévoit de monter le galet sur le volant secondaire par l'intermédiaire d'une tige autour de laquelle ledit galet est monté en rotation au moyen de corps roulants, ce qui permet de limiter les frottements affectant ladite rotation, et donc d'améliorer la fonction d'amortissement conférée. Par ailleurs, la tige est fixée dans un orifice formé à cet effet sur la périphérie du volant secondaire, par exemple au moyen d'un rivet ou d'un boulon.

Toutefois, cette réalisation ne donne pas entière satisfaction, en ce qu'elle ne permet pas de garantir une solidarisation mécanique suffisante de la tige sur le volant d'inertie, et de ce fait ne permet pas de fiabiliser l'alignement de l'axe de rotation du galet par rapport à l'axe de rotation relative des volants.

Ainsi, lors du fonctionnement du double volant amortisseur, le galet peut être désaligné par rapport à la surface de came, ce qui nuit au bon fonctionnement des moyens d'amortissement. Et, dans la mesure où les efforts réciproques exercés entre la lame et le galet d'un double volant amortisseur sont importants, les risques de désalignement du galet sont d'autant plus critiques.

L'invention vise à perfectionner l'art antérieur en proposant notamment un procédé pour le montage d'un galet sur un volant d'inertie d'un double volant amortisseur, ledit procédé permettant de garantir le bon fonctionnement des moyens amortisseurs relativement aux risques de désalignement de l'axe de rotation du galet par rapport à l'axe de rotation relative des volants d'inertie, et ce même sous les charges importantes qui sont induites par le fonctionnement du double volant amortisseur.

A cet effet, selon un premier aspect, l'invention propose un procédé de montage d'un galet sur un volant d'inertie d'un double volant amortisseur pour véhicule automobile, ledit galet étant destiné à être disposé en roulement sur une lame élastique solidaire de l'autre volant d'inertie en y exerçant un effort de flexion réversible de ladite lame en fonction des débattements angulaires relatifs desdits volants, ledit procédé prévoyant de :
- monter en rotation ledit galet autour d'une tige comprenant une extrémité annulaire creuse, ladite tige étant introduite dans un orifice formé dans le volant d'inertie en disposant ladite extrémité en saillie dudit orifice,
- déformer ladite extrémité pour former une collerette disposée en appui sur une portée d'endroit entourant ledit orifice ;
ledit procédé prévoyant :
- d'interposer une rondelle déformable élastiquement entre une portée d'envers entourant l'orifice et un épaulement formé autour de la tige ;
- préalablement à la déformation, de comprimer axialement ladite rondelle entre ladite portée d'envers et ledit épaulement ;
- de déformer ladite extrémité, ladite compression étant agencée pour, par retour élastique de la rondelle après ladite déformation, contraindre axialement l'appui de la collerette sur la portée d'endroit.

Selon un deuxième aspect, l'invention propose un double volant amortisseur pour véhicule automobile, comprenant un volant d'inertie primaire destiné à être monté sur une extrémité d'un vilebrequin, un volant d'inertie secondaire qui est monté en rotation relative par rapport audit volant d'inertie primaire, ainsi que des moyens d'amortissement agencés pour transmettre un couple et amortir les acyclismes de rotation entre lesdits volants d'inertie, lesdits moyens d'amortissement comprenant au moins une lame élastique solidaire en rotation d'un volant d'inertie et au moins un galet monté mobile en rotation sur l'autre volant d'inertie par mise en oeuvre d'un tel procédé, ladite lame présentant une surface de came sur laquelle une paroi périphérique du galet est disposée en roulement afin d'y exercer un effort de flexion réversible de ladite lame en fonction des débattements angulaires relatifs desdits volants.

D'autres particularités et avantages de l'invention apparaîtront dans la description qui suit, faite en référence aux figures annexées, dans lesquelles :
- la figure 1 représente en perspective partiellement éclatée un double volant à lames selon un mode de réalisation de l'invention ;
- les figures 2 représentent en coupe longitudinale le montage d'un galet du moyen d'amortissement de la figure 1 selon un mode de réalisation de l'invention, respectivement avant (figure 2a) et après (figure 2b) la déformation de l'extrémité annulaire creuse de la tige ;
- la figure 3 représente en coupe longitudinale le montage d'un galet du moyen d'amortissement de la figure 1 selon un autre mode de réalisation de l'invention, et ce après la déformation de l'extrémité annulaire creuse de la tige.

En relation avec ces figures, on décrit ci-dessous un double volant amortisseur pour véhicule automobile.

Le double volant amortisseur comprend un volant d'inertie primaire 1 destiné à être monté sur une extrémité d'un vilebrequin, notamment d'un moteur à combustion interne (non représenté). Pour ce faire, le volant primaire 1 est pourvu d'orifices 2 agencés pour la fixation, par exemple par vissage, dudit volant primaire sur le vilebrequin.

Le double volant amortisseur comprend en outre un volant d'inertie secondaire 3 dont la face externe 3a, c'est-à-dire la face destinée à être opposée au vilebrequin, est agencée pour coopérer avec un disque de friction d'un embrayage (non représenté).

Le volant secondaire 3 est monté en rotation relative par rapport au volant primaire 1, par exemple au moyen d'un palier à roulement, et ce autour d'un axe A qui est aligné avec les axes de révolution respectifs desdits volants.

Pour ce faire, le volant primaire 1 comprend un moyeu central 4 qui présente un alésage 5 dans lequel la bague extérieure du palier à roulement est montée. De même, le volant secondaire 3 comprend un fût central 6 sur lequel la bague intérieure du palier à roulement est destinée à être montée.

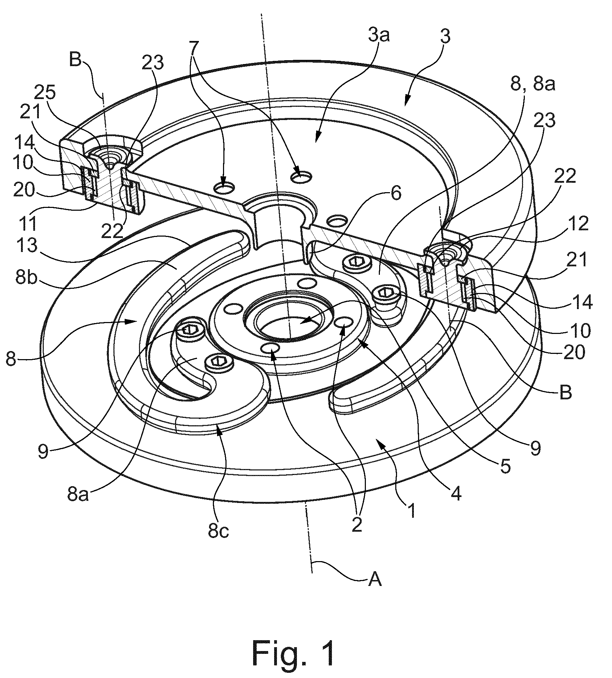

Dans le mode de réalisation représenté sur la figure 1, les orifices 2 de fixation du volant primaire 1 sont répartis angulairement autour du moyeu central 4. De même, le volant secondaire 3 comprend des orifices 7 qui sont répartis angulairement autour du fût central 6 en étant disposés en regard axial de respectivement un orifice 2 du volant primaire 1, afin de permettre le passage des vis par chacun des orifices 2, 7 lors du montage du double volant amortisseur sur le vilebrequin.

Le double volant amortisseur comprend en outre des moyens d'amortissement agencés pour transmettre un couple et amortir les acyclismes de rotation entre les volants d'inertie 1, 3. En relation avec la figure 1, les moyens d'amortissement comprennent deux lames élastiques 8 qui sont solidaires en rotation du volant primaire 1 en étant disposées symétriquement par rapport à l'axe A de rotation relative des volants 1, 3. En particulier, les lames 8 comprennent chacune une première extrémité 8a qui est fixée par des écrous 9 au volant primaire 1.

Les moyens d'amortissement comprennent en outre deux galets 10 qui sont montés en rotation sur le volant secondaire 3, notamment suivant un axe B qui est parallèle à l'axe A de rotation relative des volants 1, 3, et en étant disposés symétriquement par rapport à l'axe A.

Pour assurer la fonction d'amortissement, chaque lame 8 présente une surface de came 13 qui est formée sur son extrémité libre 8b, et sur laquelle une paroi périphérique 14 de respectivement un galet 10 est disposée en roulement.

En particulier, la surface de came 13 est agencée pour que, lors d'un débattement angulaire relatif entre le volant primaire 1 et le volant secondaire 3, le galet 10 se déplace par roulement de sa paroi périphérique 14 sur ladite surface de came, et exerce ainsi un effort de flexion de la lame 8 en fonction dudit débattement angulaire. Par ailleurs, du fait de son élasticité, la lame 8 exerce sur le galet 10 une force de rappel qui tend à ramener les volants primaire 1 et secondaire 3 vers leur position angulaire relative de repos.

Ainsi, les lames élastiques 8 sont aptes à transmettre un couple entraînant du volant primaire 1 vers le volant secondaire 3 (sens direct) et un couple résistant du volant secondaire 3 vers le volant primaire 1 (sens rétro).

En relation avec la figure 1, chaque lame élastique 8 comprend une portion courbe 8c qui relie sa première extrémité 8a et son extrémité libre 8b portant la surface de came 13, et qui s'étend de manière sensiblement circonférentielle. En particulier, le rayon de courbure et la longueur de la portion courbe 8c peuvent être déterminés en fonction de la raideur souhaitée pour la lame élastique 8. Par ailleurs, les lames élastiques 8 peuvent être réalisées en une seule pièce ou être constituées de plusieurs lamelles superposées.

De façon avantageuse, la surface de came 13 de chaque lame 8 et/ou la paroi périphérique 14 de chaque galet 10 peuvent présenter des moyens qui sont agencés pour guider le roulement de ladite paroi périphérique sur ladite surface de came, afin d'assurer un bon effort de flexion, et ce même en cas de désalignement axial des volants 1, 3.

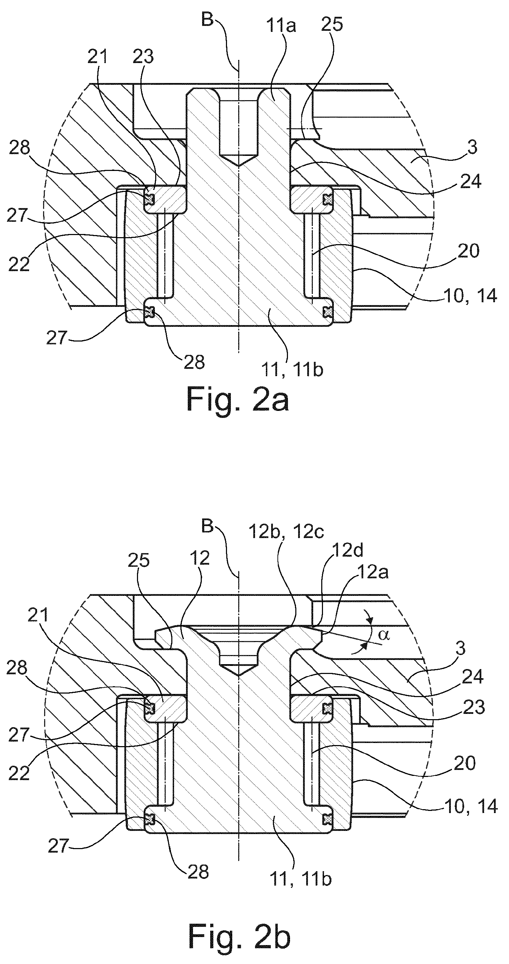

On décrit ci-dessous un procédé pour le montage des galets 10 sur le volant d'inertie secondaire 3. En particulier, dans la suite de la description, les termes « avant » et « arrière » sont définis par rapport au sens axial du montage des galets 10 sur le volant secondaire 3, respectivement en haut et en bas sur les figures 2 à 4.

Le procédé prévoit de monter en rotation chaque galet 10 autour d'une tige 11 comprenant une extrémité annulaire creuse 11a.

En relation avec les figures, chaque galet 10 est monté en rotation autour d'une tige 11 au moyen de corps roulants, par exemple des aiguilles jointives 20, ce qui permet de limiter les frottements parasites susceptibles d'affecter ladite rotation, et donc la fonction d'amortissement des moyens. Pour ce faire, la tige 11 et le galet 10 portent chacun une piste de roulement qui sont disposées en regard pour réaliser au moins un chemin de roulement dans lequel est disposée une rangée d'aiguilles jointives 20, afin de permettre la rotation du galet 10 autour de la tige 11. Par ailleurs, la tige 11 comprend un collet 11 b qui s'étend radialement depuis son extrémité opposée à la collerette 12, ledit collet fermant latéralement le côté arrière du chemin de roulement.

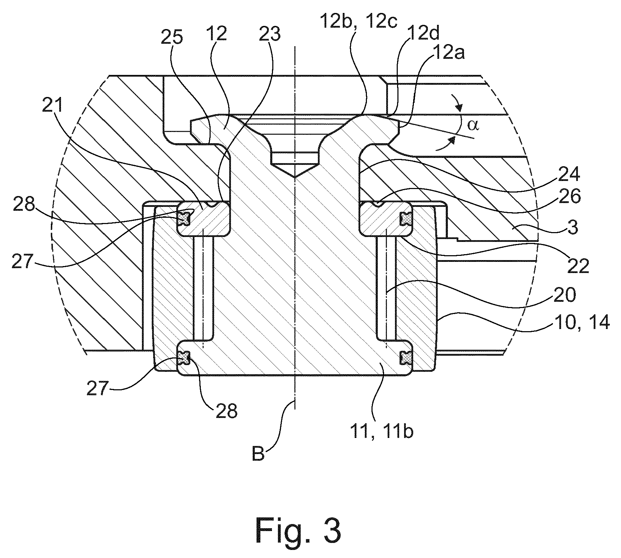

En relation avec les figures 2 et 3, le procédé prévoit, une fois le galet 10 monté sur la tige 11, d'introduire ladite tige dans un orifice formé à cet effet dans le volant d'inertie secondaire 3, et ce en disposant l'extrémité annulaire creuse 11 a en saillie dudit orifice (figure 2a), puis de déformer l'extrémité annulaire creuse 11 a pour former une collerette 12 disposée en appui sur une portée d'endroit 25 entourant l'orifice 24, afin de fixer ladite tige dans ledit orifice (figures 2b, 3).

Pour assurer un bon amortissement, l'axe de rotation du galet 10 doit demeurer aligné par rapport à l'axe A de rotation relative des volants 1, 3, afin de pouvoir appliquer un effort de flexion uniforme sur la lame 8. Pour ce faire, la tige 11 doit être fixée sur le volant secondaire 3 de manière à assurer une parfaite immobilité de ladite tige. En effet, durant le fonctionnement du double volant, la tige 11 peut, du fait de l'importance des efforts réciproques exercés entre la lame 8 et le galet 10 et/ou des éventuels désalignements entre les volants 1, 3, subir des oscillations parasites autour de l'axe B de rotation dudit galet, ce qui peut nuire au bon fonctionnement des moyens d'amortissement.

Pour pallier à ces inconvénients, le procédé prévoit d'interposer une rondelle 21 déformable élastiquement entre une portée d'envers 23 entourant ledit orifice et un épaulement 22 formé autour de ladite tige.

Le procédé prévoit ensuite, préalablement à la déformation de l'extrémité annulaire creuse 11a, de comprimer axialement la rondelle 21 entre la portée d'envers 23 et l'épaulement 22.

La compression axiale peut être réalisée d'une part en maintenant axialement le volant secondaire 3 au moyen d'un serre flan, et d'autre part en exerçant un effort axial sur le collet arrière 11 b au moyen d'une lunette. En particulier, la compression axiale peut être réalisée sous un effort axial compris entre 12 et 18 tonnes, et notamment de 15 tonnes, et sur une course comprise entre 20 et 80 µm, et notamment de 50 µm.

Le procédé peut notamment prévoir d'utiliser une rondelle 21 qui est réalisée à base d'un matériau déformable élastiquement et/ou qui présente des moyens géométriques déformables élastiquement. Selon un mode de réalisation, la rondelle 21 peut être réalisée dans un matériau métallique, notamment en acier à roulement de type 100C6.

En relation avec la figure 3, la rondelle 21 présente une gorge 26 de déformation élastique qui est disposée en appui sur la portée d'envers 23. Ainsi, lors de la compression axiale de la rondelle 21, la gorge 26 se déforme en s'arcboutant contre la portée d'envers 23, de manière à reprendre sa forme d'origine par appui sur ladite portée d'envers à la fin de ladite compression axiale.

Pour former la collerette 12 de fixation de la tige 11 dans l'orifice 24, le procédé prévoit, tout en maintenant la compression axiale susmentionnée, de déformer l'extrémité annulaire creuse 11 a, par exemple au moyen d'un outil de déformation par sertissage orbital ou par bouterollage.

Comme représenté notamment sur les figures 2b et 3, l'opération de déformation peut être réalisée de manière à obtenir une collerette 12 avec un agencement géométrique contribuant à améliorer la rétention axiale de la tige 11 dans l'orifice 24, notamment en assurant un bon contact entre la collerette 12 et la portée d'endroit 25.

En particulier, la collerette 12 peut présenter les caractéristiques suivantes :
- une surface latérale libre 12a sensiblement parallèle à l'axe B ;
- une surface avant libre 12b, comprenant une première portion 12c sensiblement plane et une deuxième portion 12d inclinée d'un angle a par rapport à la perpendiculaire à l'axe B.

Une fois la collerette 12 formée, le procédé prévoit de relâcher la compression axiale, ladite compression étant agencée pour contraindre axialement l'appui de la collerette 12 sur la portée d'endroit 25 par retour élastique de la rondelle 21, ledit retour élastique pouvant par exemple être axial et/ou radial.

En particulier, en reprenant sa forme d'origine, la rondelle 21, du fait de son appui sur la portée d'envers 23, appuie axialement sur l'épaulement 22, notamment dans le sens contraire à celui dans lequel la compression axiale était appliquée, c'est-à-dire vers l'arrière. De ce fait, la rondelle 21 entraîne axialement l'épaulement 22, et donc la collerette 12, vers l'arrière, ce qui permet d'assurer un bon appui de ladite collerette sur la portée d'endroit 25, et donc d'améliorer la stabilité de la fixation de la tige 11.

En relation avec les figures, la rondelle 21 forme en outre un collet rapporté pour fermer latéralement le côté avant du chemin de roulement. Ainsi, les aiguilles 20 sont maintenues dans le chemin de roulement grâce à l'appui axial de chacune de leurs extrémités sur respectivement la rondelle 21 et le collet arrière 11 b.

Pour assurer l'étanchéité du chemin de roulement, notamment contre la fuite de lubrifiant disposé dans ledit chemin et/ou l'intrusion dans ledit chemin de polluants extérieurs tels que de l'eau et/ou de la boue, la rondelle 21 et le collet arrière 11 b sont équipés chacun d'un joint 27. En particulier, la rondelle 21 et le collet arrière 11 b comprennent chacun une gorge 28 dans laquelle un tel joint d'étanchéité 27 est disposé.

De façon avantageuse, les joints 27 présentent chacun une géométrie torique quadrilobe, ce qui leur confère une bonne tenue à la pression, et permet de ce fait de remplir le chemin de roulement avec une quantité importante de lubrifiant. Ainsi, les aiguilles 20 peuvent bénéficier d'une bonne lubrification pour limiter les risques de frottement parasites qui pourraient contraindre la rotation du galet 10.

## Revendications

1. Procédé de montage d'un galet (10) sur un volant d'inertie (3) d'un double volant amortisseur pour véhicule automobile, ledit galet étant destiné à être disposé en roulement sur une lame élastique (8) solidaire de l'autre volant d'inertie (1) en y exerçant un effort de flexion réversible de ladite lame en fonction des débattements angulaires relatifs desdits volants, ledit procédé prévoyant de :
- monter en rotation ledit galet autour d'une tige (11) comprenant une extrémité annulaire creuse (11 a), ladite tige étant introduite dans un orifice (24) formé dans le volant d'inertie (3) en disposant ladite extrémité en saillie dudit orifice ;
- déformer ladite extrémité pour former une collerette (12) disposée en appui sur une portée d'endroit (25) entourant ledit orifice ;
ledit procédé étant **caractérisé en ce qu'**il prévoit :
- d'interposer une rondelle (21) déformable élastiquement entre une portée d'envers (23) entourant l'orifice et un épaulement (22) formé autour de la tige (11);
- préalablement à la déformation, de comprimer axialement ladite rondelle entre ladite portée d'envers et ledit épaulement ;
- de déformer ladite extrémité, ladite compression étant agencée pour, par retour élastique de la rondelle (21) après ladite déformation, contraindre axialement l'appui de la collerette (12) sur la portée d'endroit (25).

2. Procédé de montage selon la revendication 1, **caractérisé en ce que** la compression axiale de la rondelle (21) est réalisée sous un effort axial compris entre 12 et 18 tonnes.

3. Procédé de montage selon l'une des revendications 1 ou 2, **caractérisé en ce que** la compression axiale de la rondelle (21) est réalisée sur une course comprise entre 20 et 80 µm.

4. Procédé de montage selon l'une quelconque des revendications 1 à 3, **caractérisé en ce qu'**il prévoit d'utiliser une rondelle (21) qui est réalisée à base d'un matériau déformable élastiquement.

5. Procédé de montage selon l'une quelconque des revendications 1 à 4, **caractérisé en ce qu'**il prévoit d'utiliser une rondelle (21) qui présente des moyens géométriques déformables élastiquement.

6. Procédé de montage selon la revendication 5, **caractérisé en ce que** la rondelle (21) présente une gorge (26) de déformation élastique.

7. Procédé de montage selon la revendication 6, **caractérisé en ce qu'**il prévoit de disposer la gorge de déformation (26) en appui sur la portée d'envers (23).

8. Double volant amortisseur pour véhicule automobile, comprenant un volant d'inertie primaire (1) destiné à être monté sur une extrémité d'un vilebrequin, un volant d'inertie secondaire (3) qui est monté en rotation relative par rapport audit volant d'inertie primaire, ainsi que des moyens d'amortissement agencés pour transmettre un couple et amortir les acyclismes de rotation entre lesdits volants d'inertie, lesdits moyens d'amortissement comprenant au moins une lame élastique (8) solidaire en rotation d'un volant d'inertie (1) et au moins un galet (10) monté mobile en rotation sur l'autre volant d'inertie (3) par mise en oeuvre d'un procédé selon l'une quelconque des revendications 1 à 7, ladite lame présentant une surface de came (13) sur laquelle une paroi périphérique (14) du galet (10) est disposée en roulement afin d'y exercer un effort de flexion réversible de ladite lame en fonction des débattements angulaires relatifs desdits volants.

9. Double volant amortisseur selon la revendication 8, **caractérisé en ce que** la surface de came (13) de la lame (8) et/ou la paroi périphérique (14) du galet (10) présentent des moyens qui sont agencés pour guider le roulement de ladite paroi périphérique sur ladite surface de came.

10. Double volant amortisseur selon la revendication 8 ou 9, **caractérisé en ce que** la tige (11) et le galet (10) portent chacun au moins une piste de roulement qui sont disposées en regard pour réaliser au moins un chemin de roulement dans lequel une rangée de corps roulants (20) est disposée afin de permettre la rotation du galet (10) autour de la tige (11).

11. Double volant amortisseur selon la revendication 10, **caractérisé en ce que** la rondelle déformable (21) forme un collet rapporté pour fermer latéralement le côté avant du chemin de roulement.

12. Double volant amortisseur selon l'une des revendications 10 ou 11, **caractérisé en ce que** la tige (11) comprend un collet (11b) qui s'étend radialement depuis son extrémité opposée à la collerette (12), ledit collet fermant latéralement le côté arrière du chemin de roulement.

13. Double volant amortisseur selon l'une des revendications 11 ou 12, **caractérisé en ce que** la rondelle (21) et/ou le collet (11 b) sont équipés d'un joint (27) pour assurer l'étanchéité du chemin de roulement.

14. Double volant amortisseur selon la revendication 13, **caractérisé en ce que** la rondelle (21) et/ou le collet (11 b) comprennent une gorge (28) dans laquelle est disposé le joint d'étanchéité (27).

15. Double volant amortisseur selon l'une des revendications 13 ou 14, **caractérisé en ce que** le joint d'étanchéité (27) présente une géométrie torique quadrilobe.
